# EUROPÄISCHE PATENTSCHRIFT

(11) **EP 0 948 451 B1**
(45) Veröffentlichungstag und Bekanntmachung des Hinweises auf die Patenterteilung: **06.02.2002**
(21) Anmeldenummer: 97911951.8
(22) Anmeldetag: 06.05.1997
(51) Int. Cl.: B65G 15/32, F16D 69/02

(54) **VERSCHLEISSBELAG**
LINING WEAR
GARNITURE D'USURE

(30) Priorität: 08.05.1996 DE 19618456
(43) Veröffentlichungstag der Anmeldung: 13.10.1999
(73) Patentinhaber: Ohligschläger, Hans-Joachim, 51469 Bergisch Gladbach (DE)
(72) Erfinder: Ohligschläger, Hans-Joachim, 51469 Bergisch Gladbach (DE)
(86) Internationale Anmeldenummer: DE9700905
(87) Internationale Veröffentlichungsnummer: WO9742106

(56) Entgegenhaltungen:
- US-A- 3 963 113
- US-A- 3 963 665
- US-A- 4 674 622

## Beschreibung

Die Erfindung betrifft eine neue Verwendung von natürlichen und/oder künstlichen, nicht vulkanisierten Kautschukmatten, die aus nicht vernetzten Polyisoprenketten der Bruttoformel (C₅H₈)n, n > 100.000 bestehen.

Eine Vielzahl von Gummimischungen, die z. B. als Reibbeläge für Kupplungen, Bremsklötze oder auch verschleißarme Gleitgummiteile wie Scheibenwischer und dergleichen verwendet werden, enthalten zumindest in ihren Rohmischungen derartige unvernetzte Polyisoprenketten. Derartige Gummimischungen gehen beispielsweise aus den japanischen Druckschriften 04-169225 und 02-036292 oder 04-076030 hervor. Die bekannten Gummimischungen weisen aber eine vergleichsweise hohe Elastizität auf, da sie entweder vulkanisiert werden und/oder die Elästizitätseigenschaft aufgrund ihrer speziellen Zusammensetzung besitzen.

Als Verschleißschutz für abrasiv beanspruchte Bauteile, z. B. Fördereinrichtungen für Schüttgüter, Siloanlagen, Zyklone, Abscheider oder Aufbereitungsanlagen für Erze, Förderbandrollen, Abstreifer und Seitenführungsstreifen für Förderbänder und dergleichen, werden nach dem Stand der Technik Gummimatten verwendet, die auf die entsprechenden Bauteile, in der Regel Stahlkonstruktionen, z. B. durch Verkleben aufgebracht werden.

Um hohe Standzeiten des Verschleißbelages zu erreichen, bestehen diese beim Stand der Technik aus vulkanisiertem Gummi auf Kautschukbasis, wobei natürliche oder synthetisch hergestellte Materialien zum Einsatz kommen. Die verwendeten Gummimatten weisen nach dem Vulkanisationsvorgang ebenfalls eine hohe Dauerelastizität auf und sind praktisch plastisch nicht mehr verformbar. Sie müssen daher insbesondere bei räumlichen Bauteilen vor dem Aufkleben sehr exakt zugeschnitten werden, damit der spätere Belag keine größeren Fugen aufweist.

Die Verklebung der Gummimatten mit dem Stahluntergrund erfolgt üblicherweise mit Hilfe von in Trichlorethan 1.1:1. oder Trichlorethylen gelösten synthetischen Kautschuken wie beispielsweise 2-Chlorbutadien-1,3 (Chloropren).

Mit diesen Klebemitteln können im übrigen auch mehrere Gummimatten aufeinandergeklebt werden, um entsprechend dicke Verschleißbeläge herzustellen.

Bei der Verarbeitung der vulkanisierten Gummibeläge müssen die Metallflächen durch Sandstrahlen zunächst von Rost und Zunder befreit werden, anschließend wird auf die so vorbehandelte Oberfläche ein sogenannter Haftprimer aufgestrichen, der aus gelösten organischen Polymeren besteht und eine hohe Haftvermittlung zwischen Untergrund und Kleber bzw. Verschleißbelag bewirkt.

Die zur Verarbeitung vorgesehenen Gummimatten müssen vor dem Verkleben mechanisch aufgerauht werden und werden anschließend, ebenso wie die geprimerten Stahlbleche, ein- oder mehrlagig mit dem erwähnten Klebemittel beschichtet.

Nach einer Antrocknungszeit des mit einem Vernetzungsmittel vermischten Klebers können dann die Gummimatten unter Aufbringung eines möglichst hohen Anpreßdruckes mit dem Untergrund verklebt werden.

Es liegt auf der Hand, daß die beschriebene Verklebetechnik zeitaufwendig und damit teuer ist. Außerdem fällt durch das notwendige Zurechtschneiden der Gummimatten ein erheblicher, praktisch nicht wiederverwertbarer Abfall an, so daß auch die Materialkosten entsprechend hoch sind.

Der Erfindung liegt die Aufgabe zugrunde, einen Verschleißbelag für Fördereinrichtungen von Schüttgütern zu schaffen, dessen Verarbeitung weniger aufwendig ist.

Diese Aufgabe wird erfindungsgemäß dadurch gelöst, daß natürliche und/oder künstliche, nicht vulkanisierte Kautschukmatten als Verschleißbelag für Fördereinrichtungen von Schüttgütern verwendet werden, wobei die Kautschukmatten aus nicht vernetzten Polyisoprenketten der Bruttoformel (C₅H₈)n, n > 100.000 bestehen.

Im Gegensatz zu den bekannten vulkanisierten Gummimatten werden also erfindungsgemäß unvernetzte, natürliche oder synthetisch hergestellte Kautschuke eingesetzt.

Diese Materialien haben gegenüber den vulkanisierten Gummimatten den großen Vorteil, daß sie praktisch keine dauerelastischen Eigenschaften haben und nahezu beliebig plastisch verformt werden können, wobei sie sich gleichzeitig ohne Verwendung von Klebern fugenlos miteinander verbinden lassen.

Auch müssen derartige unvulkanisierte Kautschuke vor dem Aufkleben auf den Untergrund nicht mehr mechanisch aufgerauht werden, so daß die Auskleidungsarbeiten erheblich vereinfacht werden können.

Da, wie erwähnt, etwaige Wegschnitte der zugeschnittenen Kautschukplatten durch bloßes Aneinanderdrücken miteinander verklebt werden können, kann das gesamte Verschleißmaterial zu 100 % ausgenutzt werden.

Überraschenderweise hat sich beim Einsatz der unvulkanisierten Kautschukplatten für die oben beschriebenen Anwendungen herausgestellt, daß deren Standzeiten diejenigen von vulkanisierten Gummimatten trotz ihrer plastischen Eigenschaften vollständig erreichen und in Einzelfällen sogar überschreiten. Dabei ist das Abtragsverhalten dieses thermoplastischen Werkstoffes bei höheren Umgebungstemperaturen besser als bei winterlichen Temperaturen.

Eine Alterung des Materials und damit eine Verschlechterung der Verschleißschutzeigenschaften konnte nicht festgestellt werden.

Der erfindungsgemäße Verschleißbelag kann z. B. aus nicht vulkanisiertem Naturkautschuk bestehen, wobei die natürlichen Beimengungen von Eiweiß, Harzen, Zucker, Mineralsalzen und sonstigen Verbindungen unwesentlich sind. Daneben ist es auch möglich, ein Gemisch von nicht vulkanisiertem Naturkautschuk und synthetischen Kautschuken wie Styrol-Butadien-Mischpolymerisaten (SBR), Äthylen-Propylen-Dien-Kautschuken (EPDM) oder Chloropren-Kautschuke (CR), einzusetzen. Hier können beispielsweise ein Teil Naturkautschuk mit zwei Teilen SBR verwendet werden. Eine derartige Mischung läßt sich problemlos bis etwa 3 °C verarbeiten. Auch ein Einsatz aus vollständig synthetisch hergestellten Mischpolymerisaten bzw. Kautschuken ist möglich.

Da die chemische Zusammensetzung der unvulkanisierten Kautschukmatten für den angegebenen Verwendungszweck in relativ großer Breite variieren kann, ist es möglich, für ihre Herstellung nicht normgerechte bzw. vorschriftsmäßige unvulkanisierte Fehlchargen, die sonst als Sondermüll entsorgt werden müßten, einzusetzen.

Die Verschleißmatten können darüber hinaus aus Kostengründen inaktive Füllstoffe enthalten. Derartige Füllstoffe wie Sand, Kreide, Ruß oder dergleichen haben keinen Einfluß auf die Vernetzungsneigung der Polyisoprenketten des Kautschuks.

Die erfindungsgemäßen Verschleißbeläge bestehen vorzugsweise aus in Kalanderwalzwerken hergestellten Platten, deren Abmessungen je nach Verwendungszweck variieren können.

Die erfindungsgemäßen Verschleißbeläge werden mit den bereits erwähnten Klebemitteln auf die gesäuberten und geprimerten Stahluntergründe aufgeklebt, wobei jedoch, wie erwähnt, auf das Aufrauhen der Plattenoberfläche verzichtet werden kann. Auch ist zur Erreichung einer entsprechend guten Haftung auf dem Untergrund ein wesentlich geringerer Druck notwendig, da der Belag durch seine plastische Verformbarkeit paßgenau auf gebogene oder verwölbte Unterflächen angeformt werden kann und keine wie bei elastischen Gummibelägen vorhandenen Rückformkräfte auftreten.

Da die erfindungsgemäßen Kautschukbeläge, die ggf. vor dem Verkleben beispielsweise mit Trichloräthylen entfettet werden sollten, ohne Verwendung eines separaten Klebemittels aufeinandergeklebt werden können, können beliebig dicke Verschleißbeläge aus demselben Vormaterial hergestellt werden, so daß auch die Herstellung der Matten in den Kalanderwalzwerken vereinfacht wird, da für alle möglichen Verwendungszwecke lediglich ein Ausgangsmaterial mit gleichbleibender Dicke erzeugt werden muß.

## Patentansprüche

1. Verwendung von natürlichen und/oder künstlichen, nicht vulkanisierten Kautschukmatten, die aus nicht vernetzten Polyisoprenketten der Bruttoformel (C₅H₈)n, n > 100.000 bestehen, als Verschleißbelag für Fördereinrichtungen von Schüttgütern.

2. Verwendung eines Verschleißbelages nach Anspruch 1, **dadurch gekennzeichnet, daß** er zusätzlich inaktive Füllstoffe wie Sand, Kreide oder Ruß enthält.

3. Verwendung eines Verschleißbelages nach Anspruch 1 oder 2, **dadurch gekennzeichnet, daß** er aus kalandrierten Platten besteht.

## Claims

1. The usage of natural and/or artificial unvulcanized rubber mats consisting of noncrosslinked polyisoprene chains with the total formula (C5H8)n, n>100.000, as a wear coat for conveyors of bulk material.

2. Use of a wear coat as claimed in 1, **characterised in that** it additionally contains inactive filling material such as sand, chalk or soot.

3. Use of a wear coat as claimed in 1 or 2, **characterised in that** it consists of calendared plates.

## Revendications

1. Utilisation de nattes naturelles et/ou synthétiques non vulcanisées constituées de chaînes de polyisopropène non réticulées avec la formule brute (C5H8)n, n>100.000 en tant que revêtement anti-usure pour des convoyeurs de matières en vrac.

2. Utilisation d'un revêtement anti-usure selon la revendication 1, **caractérisé par le fait qu'**il contient en supplément des matières de remplissage inactives telles que sable, craie ou suie.

3. Utilisation d'un revêtement anti-usure selon la revendication 1 ou 2, **caractérisée par le fait qu'**il est constitué de panneaux calandrés.
